**Europäisches Patentamt**

**European Patent Office**

**Office européen des brevets**

(11) Veröffentlichungsnummer: **0 413 212 A2**

# (12) EUROPÄISCHE PATENTANMELDUNG

(21) Anmeldenummer: **90114879.1**

(22) Anmeldetag: **02.08.90**

(30) Priorität: **08.08.89 DE 8909523 U**

(43) Veröffentlichungstag der Anmeldung:
**20.02.91 Patentblatt 91/08**

(84) Benannte Vertragsstaaten:
**AT CH DE GB IT LI**

(51) Int. Cl.⁵: **E04B 9/18**

(71) Anmelder: **Siemens Aktiengesellschaft**
**Wittelsbacherplatz 2**
**D-8000 München 2(DE)**

(72) Erfinder: **Brüggemann, Jürgen, Ing.(grad.)**
**Berlinerstrasse 31**
**D-8225 Traunreut(DE)**

(54) **Tragschienen-Aufhängerhalterung.**

(57) Tragschienen für Lichtbänder weisen an ihrer Oberseite eine Nut auf, in der verschiebbar ein mit einem Feststeller versehener Haltebügel für Aufhänger angeordnet sind.

Die geforderte Fixierung eines solchen Haltebügels (2) an einer vorgegebenen Stelle längs einer Tragschiene führt zu einer relativ aufwendigen Ausführung eines solchen Haltebügels, der hierbei aus wenigstens zwei Teilen besteht, die an Ort und Stelle zusammengefügt werden müssen.

Es wird eine Ausführung eines Haltebügels (2) einschließlich Feststeller aus einem einzigen Teil vorgeschlagen, bei dem der Feststeller eine Klemmplatte (3.0, 3,1, 3,2) ist, die zwischen den Schenkeln (2.1) des Haltebügels (2) an einem schmalen Verbindungssteg (3) in unmittelbarer Näher oberhalb der Winkelfüße (2.11) an einem Schenkel (2.1) befestigt und so ausgerichtet ist, daß sie bei Abbiegung nach unten zwischen die Schenkel (2.1) im Bereich ihrer Winkelfüße (2.11) den Haltebügel (2) in der T-Nut (1.1) unverrückbar verspannt.

EP 0 413 212 A2

## TRAGSCHIENEN-AUFHÄNGERHALTERUNG

### Technisches Gebiet

Die Erfindung bezieht sich auf eine Tragschienen-Aufhängerhalterung, bestehend aus einem fußseitig in einer offenen T-Nut einer Tragschiene längsverschiebbaren Haltebügel mit einem Feststeller, bei der der Haltebügel kopfseitig eine Montageöffnung für die Befestigung eines von mehreren verschiedenen Aufhängern aufweist.

### Zugrundeliegener Stand der Technik

Tragschienen-Aufhängerhalterungen dieser Art finden bei Lichtbändern Anwendung, bei denen eine größere Anzahl von Langfeldleuchten hintereinander an Tragschienen befestigt werden, die ihrerseits über solche Tragschienen-Aufhängerhalterungen hinweg an einer Decke befestigt bzw. aufgehängt sind.

Bekannte Tragschienen-Aufhängerhalterungen, wie sie beispielsweise durch die Literaturstelle Siemens Leuchten-Katalog 88, Febr. 1988, Seiten 87 und 90 beschrieben und abgebildet sind, machen von einem U-förmigen Haltebügel mit einem Spannhebel Gebrauch, mit dessen Hilfe die in die T-Nut der Tragschiene eingreifenden zu Winkelfüßen geformten freien Enden der Schenkel in der T-Nut verkantet werden. Diese Art der Fixierung erfordert jedoch wenigstens ein zusätzliches Element in Form eines Abstandshalters zwischen den Winkelfüßen des Haltebügels, um zu verhindern, daß beim Verkanten der Winkelfüße in der T-Nut diese sich zusammenbiegen und aus der T-Nut herausspringen. Abgesehen davon, daß eine solche Tragschienen-Aufhänger halterung fertigungsmäßig aufwendig (relativ großer Blechverschnitt) ist, ist hiermit auch eine relativ umständliche Montage verbunden, weil das Abstandselement jeweils zusätzlich in die T-Nut zwischen die Winkelfüße des Haltebügels eingebracht und dort im Zusammenhang mit der Befestigung des eigentlichen Aufhängers zusätzlich gesichert werden muß.

### Offenbarung der Erfindung

Der Erfindung liegt die Aufgabe zugrunde, für eine Tragschienen-Aufhängerhalterung der einleitend beschriebenen Art eine weitere Lösung anzugeben, die eine leichte und schnelle Montage ermöglicht und darüber hinaus einschließlich ihres Feststellers einstückig ausgeführt werden kann.

Diese Aufgabe wird gemäß der Erfindung durch die im Patentanspruch 1 angegebenen Merkmale gelöst.

Der Erfindung liegt die Erkenntnis zugrunde, daß es für die Feststellung eines mit seinen Winkelfüßen in der T-Nut einer Haltschiene längsverschiebbaren Haltebügels völlig ausreichend ist, wenn mittels einer zwischen die Winkelfüße eingebrachten Klemmplatte der Haltebügel mit seinen Winkelfüßen in der T-Nut verspannt wird. Hierbei kann diese Klemmplatte als fester zwischen den Schenkeln des U-förmigen Haltebügels angebrachter Bestandteil so ausgeführt werden, daß die Klemmplatte bei ihrer Umbiegung nach unten zwischen die Winkelfüße der Schenkel des Haltebügels diese in der T-Nut unverrückbar verspannt.

Zugleich läßt sich ein solcher Haltebügel auch so gestalten, daß sich seine freien Schenkelenden mit den Winkelfüßen in noch nicht abgebogenem Zustand der Klemmplatte federnd weit genug zusammendrücken lassen, um ihn an jeder beliebigen Stelle in die T-Nut der Halteschiene leicht einsetzen zu können.

Vorteilhafte Ausgestaltungen des Gegenstandes nach dem Patentanspruch 1 sind in den weiteren Patentansprüchen 2 und 3 angegeben.

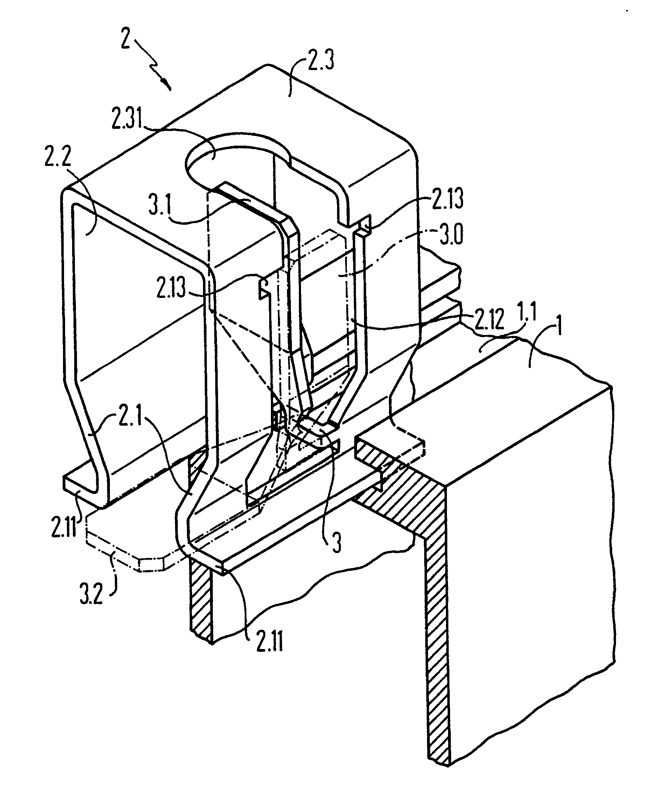

### Kurze Beschreibung der Zeichnung

In der Zeichnung bedeutet die der näheren Erläuterung der Erfindung dienende einzige Figur eine Halteschiene mit in deren nach oben offener T-Nut eingesetzten Haltebügel in perspektivischer Darstellung.

### Bester Weg zur Ausführung der Erfindung

Die Figur zeigt auf der rechten Seite im Ausschnitt eine Tragschiene 1 mit U-förmigem Querschnitt, die nach unten offen ist und der Aufnahme von Langfeldleuchten dient. An der Oberseite weist die Tragschiene 1 eine nach oben offene T-Nut 1.1 für die Aufnahme des die Tragschienen-Aufhängerhalterung darstellenden Haltebügels 2 auf.

Der Haltebügel 2 hat ein U-Profil, dessen Schenkel 2.1 an ihren freien Enden zu Winkelfüßen 2.11 gestaltet sind, mit denen der Haltebügel 2 in die T-Nut 1.1 eingreift. Der Haltebügel 2 ist in seinem U-Profil oberhalb der Winkelfüße 2.11 in einer Höhe, die größer ist als die Höhe der T-Nut 1.1 zu seinem Kopfteil 2.2 hin in seinem Querschnitt erweitert. In dem die beiden Schenkel 2.1 verbindenden Mittelteil 2.3 befindet sich die Montageöffnung 2.31 für die Montage eines Aufhängers.

Im Kopfteil 2.2 des Haltebügels 2 ist zwischen den Schenkein 2.1 eine Klemmplatte 3.1 vorgesehen. Die Klemmplatte 3.1 mündet an ihrem unteren verjüngten Ende in einen schmalen Verbindungssteg 3 aus, mit dem die Klemmplatte 3.1 am Haltebügel 2 unmittelbar oberhalb des Winkelfußes 2.11 des in der Zeichnung vorderen Schenkels 2.1 befestigt ist. Die Klemmplatte 3.1 ist mit ihrer Breitseite senkrecht zu den Breitseiten der Schenkel 2.1 ausgerichtet und wird zum Fixieren des Haltebügels 2 in der T-Nut 1.1 einfach nach unten zwischen die Schenkel 2.1 im Bereich ihrer Winkelfüße 2.11 abgebogen.

Der Haltebügel 2 kann in einfacher Weise einschließlich der Klemmplatte 3.1 aus einem streifenförmigen Plattenmaterial, beispielsweise Stahlblech, durch Biegen und Schneiden hergestellt werden. Zu diesem Zweck ist die Breite der Schenkel 2.1 des Haltebügels 2 wesentlich größer gewählt, als deren gegenseitiger Abstand im Bereich der Winkelfüße 2.11. Die Klemmplatte 3.1 wird dabei aus dem Mittelteil des in der Zeichnung vorderen Schenkels 2.1 einschließlich seines Verbindungsstegs 3 herausgeschnitten. Das herausgeschnittene Mittelteil, das bereits die Klemmplatte 3.1 darstellt, ist in die Figur in unterbrochener Linie eingetragen und mit 3.0 bezeichnet. Anschliessend wird die so gewonnene Klemmplatte 3.0 in ihre gewünschte Sollage, die in der Figur in ausgezogener Linie angegeben und mit 3.1 bezeichnet ist, durch Abbiegen des Verbindungssteges 3 an seinem schenkelseitigen Ende nach innen um 90° herbeigeführt. Durch Abbiegen der Klemmplatte 3.1 nach vorne unten, wie das in der Figur durch die in unterbrochener Linie dargestellte abgebogene Klemmplatte 3.2 angegeben ist, kann dann der Haltebügel 2 an jeder beliebigen Stelle längs der Tragschiene mit seinen Winkelfüßen 2.11 in der T-Nut 2.1 unverrückbar verspannt werden.

Selbstverständlich kann der Haltebügel 2 auch im Spritzgußverfahren aus einem Kunststoff hergestellt werden. Das Umbiegen des Verbindungssteges 3 um 90° nach innen, um die richtige Sollage für die Klemmplatte 2u erhalten, kann gegebenenfalls unter Zuhilfenahme von Wärme durchgeführt werden. Neben seiner Zähigkeit verlangt ein solcher Kunststoff auch eine ausreichende plastische Verformbarkeit im Bereich des Verbindungsstegs 3, um sicherzustellen, daß die zwischen die Schenkel 1.1 nach unten abgebogene Klemmplatte nicht nach oben zurückfedern kann.

Wie die Figur noch erkennen läßt ist die Montageöffnung 2.31 im Mittelteil 2.3 des Haltebügels 2 zur Öffnung 2.12 im Mittelteil des in der Zeichnung vorderen Schenkels 2.1 offen. Weiterhin ist am oberen Ende dieser Öffnung 2.12 zu beiden Seiten eine Führungsnut 2.13 vorgesehen, die der Montage eines einen Flansch aufweisenden Aufhängers am Haltebügel dient.

## Ansprüche

1. Tragschienen-Aufhängerhalterung, bestehend aus einem fußseitig in einer offenen T-Nut einer Tragschiene längsverschiebbaren Haltebügel mit einem Feststeller, bei der der Haltebügel kopfseitig eine Montageöffnung für die Befestigung eines von mehreren verschiedenen Aufhängern aufweist, **dadurch gekennzeichnet,**
- daß der ein U-Profil aufweisende Haltebügel (2) mit den zu Winkelfüßen (2.11) geformten freien Enden seiner Schenkel (2.1) in der T-Nut (1.1) geführt ist,
- daß das U-Profil oberhalb der Winkelfüße (2.11) in einer Höhe, die größer ist als die Höhe der T-Nut (1.1) zum Kopfteil (2.2) des Halbebügels (2) hin in seinem Querschnitt erweitert ist,
- daß der Feststeller eine zwischen den Schenkeln (2.1) angeordnete Klemmplatte (3.0, 3.1, 3.2) ist, die mit ihrer Breitseite senkrecht zur Breitseite der Schenkel (2.1) ausgerichtet mit einem der Schenkel in Nähe seines Winkelfußes (2.11) fest verbunden ist und
- daß die Klemmplatte (3.0, 3.1, 3.2) im nach unten zwischen die Winkelfüße (2.11) der Schenkel (2.1) abgebogenen Zustand diese im Sinne einer örtlichen Feststellung des Haltebügels (2) an der Tragschiene (1) in dessen T-Nut verspannt.

2. Tragschienen Aufhängerhalterung nach Anspruch 1, **dadurch gekennzeichnet,** daß die Breite der Schenkel (2.1) des Haltebügels (2) wesentlich größer ist als deren gegenseitiger Abstand im Bereich der Winkelfüße (2.11).

3. Tragschienen Aufhängerhalterung nach Anspruch 1 und 2, **dadurch gekennzeichnet,** daß der Haltebügel (2) einschließlich der Klemmplatte (3.0, 3.1, 3.2) einstückig aus einem plattenförmigen Material in Streifenform, z.B. Stahlblech, dadurch gefertigt ist, daß die Klemmplatte (3.0, 3.1, 3.2) einschließlich eines schmalen seitlichen Verbindungssteges (3) vom Mittelteil des einen der beiden Schenkel (2.1) gebildet und durch Umbiegen des Verbindungssteges (3) am schenkelseitigen Ende gegen den anderen der beiden Schenkelk (2.1) mit ihrer Breitseite senkrecht zur Breite der Schenkel (2.1) zwischen den Schenkeln (2.1) ausgerichtet ist.